(19) Europäisches Patentamt
European Patent Office
Office européen des brevets

(11) EP 2 303 796 B1

(12) **FASCICULE DE BREVET EUROPEEN**

(45) Date de publication et mention
de la délivrance du brevet:
**13.03.2013 Bulletin 2013/11**

(51) Int Cl.:
**C04B 35/478** (2006.01)  **B22D 41/32** (2006.01)
**C04B 35/626** (2006.01)

(21) Numéro de dépôt: **09772747.3**

(86) Numéro de dépôt international:
**PCT/FR2009/051295**

(22) Date de dépôt: **02.07.2009**

(87) Numéro de publication internationale:
**WO 2010/001065 (07.01.2010 Gazette 2010/01)**

(54) **GRAINS FONDUS D'OXYDES COMPRENANT AL, TI, MG ET ZR ET PRODUITS CERAMIQUES COMPORTANT DE TELS GRAINS**

VERSCHMOLZENE KÖRNER AUS OXIDEN MIT AL, TI, MG UND ZR SOWIE KERAMIKPRODUKTE MIT DERARTIGEN KÖRNERN

FUSED GRAINS OF OXIDES COMPRISING AL, TI, MG AND ZR AND CERAMIC PRODUCTS COMPRISING SUCH GRAINS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **04.07.2008 FR 0854582**

(43) Date de publication de la demande:
**06.04.2011 Bulletin 2011/14**

(73) Titulaire: **Saint-Gobain Centre de Recherches et d'Etudes Européen**
**92400 Courbevoie (FR)**

(72) Inventeur: **RAFFY, Stéphane**
**F-84300 Cavaillon (FR)**

(74) Mandataire: **Lucas, Francois**
**SAINT-GOBAIN RECHERCHE**
**Département Propriété Industrielle**
**39, Quai Lucien Lefranc**
**93300 Aubervilliers (FR)**

(56) Documents cités:
**EP-A1- 1 820 785**

• **WOHLFROMM H ET AL: "Effect of ZrSiO2 and MgO additions on reaction sintering and properties of Al2TiO5-based materials" JOURNAL OF MATERIALS SCIENCE,, vol. 25, no. 8, 1 août 1990 (1990-08-01), pages 3753-3764, XP002512515**
• **S. HOFFMANN ET AL.: "Melt synthesis of Al2TiO5 containing composites and reinvestigation of the phase diagram Al2O3?TiO2 by powder X-ray diffraction" JOURNAL OF ELECTROCERAMICS, vol. 16, no. 4, juillet 2006 (2006-07), pages 327-330, XP002513010 ISSN: 1573-8663**
• **MASAYUKI ISHITSUKA ET AL: "Synthesis and Thermal Stability of Aluminum Titanate Solid Solutions" JOURNAL OF THE AMERICAN CERAMIC SOCIETY,, vol. 70, no. 2, 1 janvier 1987 (1987-01-01), pages 69-71, XP002512516**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention se rapporte à des grains pour applications céramiques constitués majoritairement d'oxydes des cations Mg, Al, Ti et Zr. L'invention se rapporte également à un procédé de fabrication de tels grains, ainsi qu'à des produits céramiques constitués à partir desdits grains ou comprenant ceux-ci, en particulier mais pas uniquement, à des structures filtrantes ou des supports catalytiques, notamment utilisées dans une ligne d'échappement d'un moteur à combustion interne du type diesel.

Dans la suite de la description, on décrit l'application des grains selon l'invention et leurs avantages dans le domaine spécifique des filtres ou supports catalytiques permettant l'élimination des polluants contenus dans les gaz d'échappement issus d'un moteur thermique essence ou diesel. Il est cependant bien entendu que de tels grains, par les avantages qu'ils procurent, sont susceptibles d'être utilisés avantageusement dans de nombreuses autres applications dans le domaine des céramiques, notamment dans tout domaine pour lequel une bonne stabilité thermique et/ou un faible coefficient de dilatation thermique (CTE) sont recherchés. On peut citer en particulier, mais sans s'y restreindre, les domaines suivants : fabrication de pièces réfractaires utilisées au contact de l'aluminium ou des métaux fondus, plaques à tiroirs, filtres à métaux ou fabrication de gazetterie pour les fours de frittage.

Dans le cas particulier des structures de dépollution des gaz d'échappement, celles ci présentent en général une structure en nid d'abeille.

De façon connue, durant son utilisation, un filtre à particules est soumis à une succession de phases de filtration (accumulation des suies) et de régénération (élimination des suies). Lors des phases de filtration, les particules de suies émises par le moteur sont retenues et se déposent à l'intérieur du filtre. Lors des phases de régénération, les particules de suie sont brûlées à l'intérieur du filtre, afin de lui restituer ses propriétés de filtration. On conçoit donc que les propriétés de résistance mécanique aussi bien à basse qu'à haute température du matériau constitutif du filtre sont primordiales pour une telle application. De même, le matériau doit présenter une structure suffisamment stable pour supporter, notamment sur toute la durée de vie du véhicule équipé, des températures qui peuvent monter localement jusqu'à des valeurs sensiblement supérieures à 1000°C, notamment si certaines phases de régénérations sont mal contrôlés.

A l'heure actuelle, les filtres sont principalement en matière céramique poreuse, le plus souvent en carbure de silicium ou en cordiérite. De tels filtres catalytiques en carbure de silicium sont par exemple décrits dans les demandes de brevets EP 816 065, EP 1 142 619, EP 1 455 923 ou encore WO 2004/090294 et WO 2004/065088. De tels filtres permettent d'obtenir des structures filtrantes chimiquement inertes, d'excellente conductivité thermique et présentant des caractéristiques de porosité, en particulier la taille moyenne et la répartition en taille des pores, idéales pour une application de filtrage des suies issues d'un moteur thermique.

Cependant, certains inconvénients propres à ce matériau subsistent encore :

Un premier inconvénient est lié au coefficient de dilatation thermique un peu élevé du SiC, supérieur à $3.10^{-6}$ $K^{-1}$, qui n'autorise pas la fabrication de filtres monolithiques de grande taille et oblige le plus souvent à segmenter le filtre en plusieurs éléments en nid d'abeille liés par un ciment, tel que cela est décrit dans la demande EP 1 455 923. Un deuxième inconvénient, de nature économique, est lié à la température de cuisson extrêmement élevée, typiquement supérieure à 2100°C, permettant un frittage assurant une résistance thermo-mécanique suffisante des structures en nid d'abeille, notamment lors des phases successives de régénération du filtre. De telles températures nécessitent la mise en place d'équipements spéciaux qui augmentent de façon sensible le coût du filtre finalement obtenu.

D'un autre coté, si les filtres en cordiérite sont connus et utilisés depuis longtemps, du fait de leur faible coût, il est aujourd'hui connu que des problèmes peuvent survenir dans de telles structures, notamment lors des cycles de régénération mal contrôlés, au cours desquels le filtre peut être soumis localement à des températures supérieures à la température de fusion de la cordiérite. Les conséquences de ces points chauds peuvent aller d'une perte d'efficacité partielle du filtre à sa destruction totale dans les cas les plus sévères. En outre, la cordiérite ne présente pas une inertie chimique suffisante, au regard des températures atteintes lors des cycles successifs de régénération et est de ce fait susceptible de réagir et d'être corrodé par les espèces provenant des résidus de lubrifiant, carburant ou autres huiles, accumulés dans la structure lors des phases de filtration, ce phénomène pouvant également être à l'origine de la détérioration rapide des propriétés de la structure.

Par exemple, de tels inconvénients sont décrits dans la demande de brevet WO 2004/011124 qui propose pour y remédier un filtre à base de titanate d'aluminium (60 à 90% poids), renforcé par de la mullite (10 à 40% poids), dont la durabilité est améliorée.

Selon une autre réalisation, la demande EP 1 559 696 propose l'utilisation de poudres pour la fabrication de filtres en nid d'abeille obtenues par frittage réactif des oxydes d'aluminium, de titane et de magnésium entre 1000 et 1700°C. Le matériau obtenu après frittage se présente sous la forme d'un mélange de deux phases : une phase majoritaire de type structural titanate d'alumine pseudo-brookite $Al_2TiO_5$ contenant du titane, de l'aluminium et du magnésium et une phase minoritaire feldspath, du type $Na_yK_{1-y}AlSi_3O_8$.

Cependant, les expériences effectuées par le demandeur ont montré qu'il était difficile à l'heure actuelle de garantir les performances d'une structure à base de matériaux du type titanate d'alumine, en particulier d'atteindre des valeurs de stabilité thermique, de coefficient de dilatation thermique et de résistance à la corrosion propre par exemple à la rendre directement utilisable dans une application haute température du type filtre à particules.

En particulier, dans l'application particulière de filtration des particules par un matériau du groupe des oxydes, la résistance à la corrosion doit être contrôlée, de manière à éviter des modifications de la porosité du filtre. Plus précisément, une forte propension à la corrosion du matériau utilisé comme constituant du filtre provoque une réaction susceptible de refermer la porosité et diminuer considérablement la capacité de filtration et, dans les cas les plus sévères, peut être à l'origine d'une fuite par perçage d'une paroi filtrante.

Le but de la présente invention est ainsi de fournir de nouveaux grains comprenant ou constitué par un matériau oxyde du type titanate d'aluminium, présentant des propriétés, telles que précédemment décrites et notamment de CTE, stabilité et résistance à la corrosion, sensiblement améliorées, notamment de manière à en rendre plus avantageux l'utilisation dans de nombreux domaines d'application des matériaux céramiques et en particulier pour la fabrication d'une structure filtrante et/ou catalytique, typiquement en nid d'abeille.

Plus précisément, la présente invention se rapporte à des grains fondus présentant la composition chimique suivante, en pourcentages poids sur la base des oxydes :

- moins de 55% d'$Al_2O_3$,
- plus de 35% et moins de 80% de $TiO_2$,
- plus de 1% et moins de 20% de MgO,
- plus de 0,7% et moins de 20% de $ZrO_2$,
- moins de 20% de $SiO_2$,

lesdits grains fondus répondant en outre à la composition suivante, en pourcentage molaire sur la base des seuls oxydes $Al_2O_3$, $TiO_2$, MgO, $ZrO_2$ :

$$90 < 2a + 3m < 110$$

$$100 + a < 3t < 210 - a,$$

$$a + t + m + zr = 100,$$

dans laquelle :

- a est le pourcentage molaire d'$Al_2O_3$,
- t est le pourcentage molaire de $TiO_2$,
- m est le pourcentage molaire de MgO,
- zr est le pourcentage molaire de $ZrO_2$.

Par le terme « sur la base des oxydes », il est entendu au sens de la présente description que les pourcentages (poids ou molaires) sont calculés sur la base des oxydes correspondants aux éléments présents dans lesdits grains.

De préférence, dans la formulation précédente, $92 \leq 2a + 3m \leq 108$ et de manière très préférée $95 \leq 2a + 3m \leq 105$.

De préférence, dans la formulation précédente, $100 + a \leq 3t \leq 205 - a$ et de manière très préférée $100 + a \leq 3t \leq 200 - a$.

De préférence, $Al_2O_3$ représente plus de 15% de la composition chimique, les pourcentages étant donnés en poids sur la base des oxydes. Par exemple, notamment pour une application du type structure poreuse, $Al_2O_3$ peut représenter plus de 25% et de préférence encore plus de 35% de la composition chimique. De préférence $Al_2O_3$ représente moins de 54%, voire moins de 52% de la composition chimique, les pourcentages étant donnés en poids sur la base des oxydes.

De préférence, $TiO_2$ représente plus de 35% et de manière très préférée plus de 40% de la composition chimique. De préférence $TiO_2$ représente moins de 60% et de manière très préférée moins de 55%, de la composition chimique, les pourcentages étant donnés en poids sur la base des oxydes.

De préférence, MgO représente plus de 1,5% et de manière très préférée plus de 2% de la composition chimique. De préférence, MgO représente moins de 10% et de manière très préférée moins de 6% de la composition chimique, les pourcentages étant donnés en poids et sur la base des oxydes.

De préférence, $ZrO_2$ représente plus de 0,8% de la composition chimique, les pourcentages étant donnés en poids et sur la base des oxydes. De préférence, $ZrO_2$ représente moins de 12% et de manière très préférée moins de 6% de la composition chimique. Sans sortir du cadre de l'invention, au moins une partie, voire la totalité, du $ZrO_2$ peut être remplacée par au moins un oxyde choisi dans le groupe constitué par $Ce_2O_3$ ou $HfO_2$, sur la base d'un remplacement en pourcentage molaire de l'élément Zr par l'élément Ce et/ou par l'élément Hf. C'est notamment le cas lorsque la source de Zr utilisée comporte une proportion sensible de Hf, comme il est courant dans la majorité des sources de Zirconium commercialisées à ce jour. Rapportée au pourcentage poids de la totalité des oxydes présents, les grains selon l'invention peuvent en outre comprendre d'autres éléments minoritaires. En particulier, les grains peuvent comprendre du silicium, dans une quantité par exemple comprise entre 0,01 et 20%, de préférence entre 0,1 et 10%, sur une base $SiO_2$.

Les grains peuvent en outre comprendre d'autres éléments tels que Ca, Na, K, Fe, Ba, Sr la quantité sommée totale desdits éléments présents étant par exemple inférieure à 6% poids, notamment inférieure à 3% poids, ou même inférieure à 2% poids sur la base des oxydes correspondants, rapportée au pourcentage poids de la totalité des oxydes correspondant aux éléments présents dans lesdits grains. Selon un exemple de réalisation, le pourcentage de chaque élément minoritaire, sur la base du poids de l'oxyde correspondant, est de préférence inférieur à 0,7%. Selon un autre exemple de réalisation, le pourcentage des éléments Ca, Sr, Ba, sur la base du poids des oxydes correspondants, est supérieur à 2%, ou même supérieur à 3%, notamment compris entre 3 et 5% poids.

Afin de ne pas alourdir inutilement la présente description, toutes les combinaisons possibles selon l'invention entre les différentes modes préférés des compositions des grains selon l'invention, tels qu'ils viennent d'être décrits précédemment, ne sont pas reportées. Il est cependant bien entendu que toutes les combinaisons possibles des domaines et valeurs initiaux et/ou préférés précédemment décrits sont envisagées et doivent être considérées comme décrites par le demandeur dans le cadre de la présente description (notamment de deux, trois combinaisons ou plus).

Les grains fondus selon l'invention peuvent comprendre principalement ou être constitués par une phase oxyde du type pseudo-brookite comprenant du titane, de l'aluminium, du magnésium et du zirconium.

Par « principalement », il est entendu au sens de la présente description que la phase du type pseudo-brookite représente au moins 60% et de préférence au moins 70% ou même au moins 80% du poids total des grains.

Les grains selon l'invention peuvent en outre comprendre une phase minoritaire constituée par une phase silicatée, dans des proportions pouvant aller de 0 à 40% du poids total des grains, de préférence de 0 à 30% et de manière très préférée de 0 à 25% du poids total des grains. Selon l'invention, ladite phase silicatée peut être constituée principalement de silice et d'alumine. De préférence, la proportion de silice dans la phase silicatée est supérieure à 50%, voire supérieure à 60%.

Les grains selon l'invention peuvent en outre comprendre une phase minoritaire comprenant essentiellement de l'oxyde de titane $TiO_2$ et/ou de l'oxyde de zirconium $ZrO_2$. Par le terme « comprenant essentiellement », il est entendu que le pourcentage poids de $TiO_2$ et/ou de $ZrO_2$ dans cette phase est de l'ordre d'au moins 80%, voire d'au moins 90%.

La phase oxyde du type pseudo-brookite des grains fondus selon la présente invention peut répondre sensiblement à la formulation :

$$(Al_2TiO_5)_x \, (MgTi_2O_5)_y \, (MgTiZrO_5)_z,$$

dans laquelle :

- x est compris entre 0 et 0,945
- y est compris entre 0,05 et 0,995,
- z est compris entre 0,005 et 0,1
- x + y + z = 1

Par exemple, les grains fondus selon l'invention comprennent une phase principale du type pseudo-brookite et au moins une phase secondaire, ladite phase secondaire étant une phase silicatée et/ou une phase constituée essentiellement d'oxyde de titane $TiO_2$ et/ou d'oxyde de zirconium $ZrO_2$.

L'invention se rapporte également à un produit céramique comprenant les grains tels que précédemment décrits, notamment pour une utilisation dans les domaines suivants : fabrication de pièces réfractaires utilisées au contact de l'aluminium ou des métaux fondus, plaques à tiroirs, filtres à métaux ou fabrication de gazetterie pour les fours de frittage.

En particulier, l'invention se rapporte selon un mode possible à un produit céramique se caractérisant en ce qu'il comprend un matériau céramique, lui-même comprenant principalement ou étant constitué par une phase oxyde du type pseudo-brookite comprenant du titane, de l'aluminium, du magnésium et du zirconium, dans des proportions telles que la phase du type pseudo-brookite répond sensiblement à la formulation :

$(Al_2TiO_5)_x (MgTi_2O_5)_y (MgTiZrO_5)_z,$

ledit matériau répondant à la composition suivante, en pourcentage molaire sur la base des seuls oxydes $Al_2O_3$, $TiO_2$ $MgO$, $ZrO_2$:

$$90 < 2a + 3m < 110$$

$$100 + a < 3t < 210 - a,$$

$$a + t + m + zr = 100,$$

dans laquelle :

- a est le pourcentage molaire d'$Al_2O_3$,
- t est le pourcentage molaire de $TiO_2$,
- m est le pourcentage molaire de $MgO$,
- zr est le pourcentage molaire de $ZrO_2$.

De préférence, dans la formulation précédente, $92 \leq 2a + 3m \leq 108$ et de manière très préférée $95 \leq 2a + 3m \leq 105$.

De préférence, dans la formulation précédente, $100 + a \leq 3t \leq 205 - a$ et de manière très préférée $100 + a \leq 3t \leq 200 - a$.

Typiquement, le produit céramique selon l'invention présente la composition chimique suivante, en pourcentage poids sur la base des oxydes :

- moins de 55% d'$Al_2O_3$,
- plus de 35% et moins de 80% de $TiO_2$,
- plus de 1% et moins de 20% de $MgO$,
- plus de 0,7% et moins de 20% de $ZrO_2$,
- moins de 20% de $SiO_2$.

Selon un mode de réalisation possible, le produit céramique selon l'invention présente la composition chimique suivante, en pourcentage poids sur la base des oxydes :

- plus de 35% et moins de 54% d'$Al_2O_3$,
- plus de 40% et moins de 55% de $TiO_2$,
- plus de 1,5% et moins de 10% de $MgO$,
- plus de 0,7% et moins de 6% de $ZrO_2$,
- moins de 10% de $SiO_2$, de préférence au moins 0,1% de $SiO_2$ et de manière au moins 1%, voire au moins 2% de $SiO_2$.

Dans le produit céramique selon l'invention les valeurs de x, y et z de la formulation précédente sont définies par exemple comme suit:

- x est compris entre 0 et 0,945
- y est compris entre 0,05 et 0,995,
- z est compris entre 0,005 et 0,1
- x + y + z = 1

Selon des modes de réalisation possibles :

- x est compris entre 0,70 et 0,90,
- y est compris entre 0,05 et 0,50,
- z est compris entre 0,007 et 0,07 et
- x + y + z = 1.

Le produit céramique selon l'invention peut par exemple comprendre une phase principale constituée par la phase du type pseudo-brookite et au moins une phase secondaire, ladite phase secondaire étant une phase silicatée et/ou une phase constituée essentiellement d'oxyde de titane $TiO_2$ et/ou d'oxyde de zirconium $ZrO_2$.

Ladite phase secondaire peut notamment être constituée par une phase silicatée, dans des proportions pouvant aller de 0 à 40% du poids total du matériau. Typiquement, ladite phase silicatée est constituée principalement de silice et d'alumine, la proportion massique de silice dans la phase silicatée étant supérieure à 50%.

Une autre phase secondaire peut comprendre essentiellement de l'oxyde de titane $TiO_2$ et/ou de l'oxyde de zirconium $ZrO_2$.

Selon un mode de réalisation particulier, le produit céramique selon l'invention présente une structure du type en nid d'abeilles, en particulier sous la forme d'un support catalytique ou filtre pour application automobile, le matériau céramique constituant ladite structure ayant une porosité supérieure à 10% et une taille des pores centrée entre 5 et 60 microns.

Les grains de l'invention peuvent avantageusement être élaborés par électrofusion, ce qui permet la fabrication de grandes quantités de grains avec des rendements intéressants et un très bon rapport prix/performance. L'invention se rapporte également au procédé de fabrication de grains précédemment décrits, comportant les étapes suivantes :

a) mélange des matières premières pour former la charge de départ ;
b) fusion de la charge de départ jusqu'à obtention du liquide en fusion ;
c) refroidissement dudit liquide en fusion de manière à ce que le liquide fondu soit entièrement solidifié, par exemple en moins de 3 minutes;
d) optionnellement, broyage de ladite masse solide de manière à obtenir un mélange de grains.

Selon l'invention, les matières premières sont choisies à l'étape a) de manière à ce que les grains obtenus à l'étape d) soient conformes à l'invention.

Bien entendu, sans sortir du cadre de l'invention, tout autre procédé conventionnel ou connu de fabrication de grains fondus peut également être mis en oeuvre, pourvu que la composition de la charge de départ permette d'obtenir des grains présentant une composition conforme à celle des grains de l'invention.

A l'étape b), on utilise de préférence un four à arc électrique, mais tous les fours connus sont envisageables, comme un four à induction ou un four à plasma, pourvu qu'ils permettent de faire fondre complètement la charge de départ. La cuisson est de préférence effectuée dans des conditions neutres, par exemple sous argon, ou oxydantes, de préférence à pression atmosphérique.

A l'étape c), le refroidissement peut être rapide, c'est-à-dire que le liquide fondu est entièrement solidifié en moins de 3 minutes. De préférence il résulte d'un coulage dans des moules CS tels que décrits dans le brevet US 3,993,119 ou d'une trempe.

A l'étape d), la masse solide est broyée, selon des techniques conventionnelles, jusqu'à obtenir la taille des grains propre à l'application envisagée.

Selon une application particulière, la présente invention se rapporte à une structure du type en nid d'abeilles, faite d'un matériau céramique poreux, ladite structure étant constitué d'un matériau céramique poreux obtenu à partir d'au moins 5% poids de grains selon l'invention et de préférence d'au moins 20%, 50%, 80% voire 100% poids de grains selon l'invention.

Lorsque les structures obtenues selon l'invention sont destinées à une utilisation comme support catalytique ou filtre à particules, elles présentent une porosité adaptée, en général comprise entre 20 et 65%, la taille moyenne des pores étant idéalement comprise entre 10 et 20 microns.

De telles structures filtrantes présentent le plus souvent une partie centrale comprenant un élément filtrant en nid d'abeille ou une pluralité d'éléments filtrants en nid d'abeille reliés entre eux par un ciment de joint, le ou lesdits éléments comprenant un ensemble de conduits ou canaux adjacents d'axes parallèles entre eux séparés par des parois poreuses, lesquels conduits étant obturés par des bouchons à l'une ou l'autre de leurs extrémités pour délimiter des chambres d'entrée s'ouvrant suivant une face d'admission des gaz et des chambres de sortie s'ouvrant suivant une face d'évacuation des gaz, de telle façon que le gaz traverse les parois poreuses.

Un procédé de fabrication d'une telle structure à partir d'un mélange initial de grains selon l'invention est par exemple le suivant :

Dans un premier temps, on mélange des grains fondus selon l'invention tels que précédemment décrits. Par exemple, les grains fondus ont été broyés de telle façon qu'ils présentent un diamètre médian inférieur à 50 microns. Le procédé de fabrication comprend typiquement une étape de malaxage d'un mélange initial comprenant les grains, un liant organique du type méthylcellulose et un porogène puis en ajoutant de l'eau jusqu'à obtenir la plasticité souhaitée pour permettre l'étape d'extrusion qui suit.

Par exemple, au cours de la première étape, on malaxe un mélange comprenant :

- au moins 5% poids par exemple au moins 50%, voire au moins 90% ou même 100% de grains selon l'invention, le reste du mélange pouvant être constitué de poudre ou de grains d'autres matériaux ou encore d'oxydes simples des éléments Al, Ti, Mg ou Zr ou de précurseurs desdits oxydes, par exemple sous forme de carbonates, hydroxydes ou autres organométalliques des précédents éléments,
- éventuellement de 1 à 30 % en masse d'au moins un agent porogène choisi en fonction de la taille des pores recherchée,
- au moins un plastifiant organique et/ou un liant organique,
- une quantité appropriée d'eau pour permettre la mise en forme du produit.

Par précurseur, on entend un matériau qui se décompose en l'oxyde simple correspondant à un stade souvent précoce du traitement thermique, c'est-à-dire à une température de chauffe typiquement inférieure à 1000°C, voire inférieure à 800° ou même à 500°C.

Le malaxage résulte en un produit homogène sous la forme d'une pâte. L'étape d'extrusion de ce produit à travers une filière appropriée permet d'obtenir des monolithes en forme de nid d'abeilles. Le procédé comprend par exemple ensuite une étape de séchage des monolithes obtenus. Au cours de l'étape de séchage, les monolithes céramiques crus obtenus sont typiquement séchés par micro-onde ou à une température pendant un temps suffisant pour amener la teneur en eau non liée chimiquement à moins de 1% en masse. Dans le cas ou l'on souhaite obtenir un filtre à particules, le procédé peut comprendre en outre une étape de bouchage d'un canal sur deux à chaque extrémité du monolithe.

L'étape de cuisson des monolithes est réalisée à une température supérieure à 1300°C mais ne dépassant pas 1800°C, de préférence ne dépassant pas 1750°C. Par exemple, durant cette étape de cuisson, la structure monolithe est portée à une température comprise entre 1400°C et 1600°C, sous une atmosphère contenant de l'oxygène ou un gaz neutre.

Le procédé peut éventuellement comprendre une étape d'assemblage des monolithes en une structure de filtration assemblée selon des techniques bien connues, par exemple décrites dans la demande EP 816 065.

La présente invention se rapporte selon un exemple d'application à un filtre ou un support catalytique obtenu à partir d'une structure telle que précédemment décrite et par dépôt, de préférence par imprégnation, d'au moins une phase catalytique active supportée ou de préférence non supportée, comprenant typiquement au moins un métal précieux tel que Pt et/ou Rh et/ou Pd et éventuellement un oxyde tel que $CeO_2$, $ZrO_2$, $CeO_2$-$ZrO_2$. De telles structures trouvent notamment leur application comme support catalytique dans une ligne d'échappement d'un moteur diesel ou essence ou comme filtre à particules catalytique dans une ligne d'échappement d'un moteur diesel.

L'invention et ses avantages seront mieux compris à la lecture des exemples non limitatifs qui suivent. Dans les exemples, tous les pourcentages sont donnés en poids.

**Exemples** :

Dans tous les exemples, les échantillons ont été préparés à partir des matières premières suivantes :

- Anatase comportant plus de 98% de $TiO_2$, commercialisée par la société Altichem ou rutile comportant plus de 95% de $TiO_2$ et présentant un diamètre médian $d_{50}$ d'environ 120 $\mu$m, commercialisée par la société Europe Minerals,

- Alumine AR75 comportant plus de 98% d'$Al_2O_3$, commercialisée par la société Alcan et présentant un diamètre médian $d_{50}$ d'environ 85 $\mu$m,

- $SiO_2$ avec un taux de pureté supérieur à 99,5% et de diamètre médian $d_{50}$ : 208 $\mu$m, commercialisée par la société Sifraco,

- MgO avec un taux de pureté supérieur à 98% avec plus de 80% de particules présentant un diamètre compris entre 0,25 et 1 mm, commercialisée par la société Nedmag,

- Chaux comportant environ 97% de CaO, avec plus de 80% de particules présentant un diamètre inférieur à 80$\mu$m,

- Carbonate de potassium comportant plus de 99,5% de $K_2CO_3$, commercialisée par la société Albemarle avec plus de 80% de particules présentant un diamètre compris entre 0,25 et 1 mm,

- Zircone avec un taux de pureté supérieur à 98,5% et de diamètre médian $d_{50}$ = 3,5 $\mu$m, commercialisée sous la référence CC10 par la société Saint-Gobain ZirPro.

Les échantillons des exemples selon l'invention et comparatifs, ont été obtenus par fusion du mélange des poudres précédentes, dans les proportions appropriées.

Plus précisément les mélanges de réactifs initiaux ont été fondus au four à arcs électriques, sous air. Les mélanges fondus ont ensuite été coulés en moule CS de façon à obtenir un refroidissement rapide. Ils sont ensuite broyés et tamisés pour retenir les poudres passant à 36 $\mu$m. Ces poudres sont utilisées pour réaliser des échantillons pressés sous la forme de disques qui sont ensuite frittés à une température comprise entre 1300°C et 1600°C pendant 4 heures. On obtient ainsi les échantillons ou matériaux des exemples 1 à 14.

Les échantillons préparés sont ensuite analysés. Les résultats des analyses pratiquées sur chacun des échantillons des exemples sont regroupés dans les tableaux 1 et 2.

Dans les tableaux 1 et 2 :

1°) La composition chimique, indiquée en pourcentages poids sur la base des oxydes, a été déterminée par fluorescence des rayons X.

2°) Les phases cristallines présentes dans les produits réfractaires ont été caractérisées par diffraction des rayons X et analyse microsonde. Dans le tableau 1, AMTZ indique une solution solide du type $(Al_2TiO_5)_x$ $(MgTi_2O_5)_y$ $(MgTiZrO_5)_z$, P2 indique la présence d'une phase secondaire minoritaire et PS correspond à une phase secondaire silicatée, « M » correspond à la phase principale, « ~ » signifie que la phase est présente sous forme de traces.

3°) La stabilité des phases cristallines présentes est évaluée par un test consistant à comparer par diffraction des RX les phases cristallines présentes initialement à celles présentes après un traitement thermique de 100 heures à 1100°C. Le produit est considéré comme stable si l'intensité maximale du pic principal traduisant l'apparition de rutile $TiO_2$ après ce traitement reste inférieur à 50% de la moyenne des intensités maximales des 3 pics principaux de la phase AMTZ. Les valeurs reportées dans le tableau 1 correspondent au rapport, en pourcentage, entre l'intensité maximale du pic principal de la phase rutile par rapport à la moyenne des intensités maximales des 3 pics principaux de la phase AMTZ selon la formule :

$$TiO_2/AMTZ = \frac{\text{Intensité max. du pic principal du rutile}}{\text{Moyenne des intensités max. des 3 plus grands pics de AMTZ}}$$

Il est considéré qu'un rapport inférieur à 50 des intensités, tel que décrit précédemment, caractérise une bonne stabilité du matériau et permet son utilisation.

4°) Le coefficient de dilatation thermique (CTE) correspond à la moyenne des valeurs obtenues classiquement de 25°C à 1000°C par dilatométrie sur des pastilles préparées à partir de poudres de même tranche granulométrique, dont le diamètre médian $d_{50}$ est inférieur à 50$\mu$m. Les pastilles sont obtenues par pressage puis frittage à la température indiquée dans le tableau 1.

5°) Le module de rupture (MoR) est déterminé à la température ambiante en flexion 4 points de manière classique sur des barrettes de dimensions 45 mm x 4 mm x 3 mm obtenues par pressage isostatique puis frittage des poudres.

Tableau 1

| Exemple | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| $Al_2O_3$ | | 37,1 | 41,7 | 37,5 | 0,42 | 37,1 | 36,5 | 40,5 | 40,5 | 39,4 | 39,1 | 38,6 | 96,1 | 40,5 | 40,5 |
| $TiO_2$ | | 51,3 | 43,6 | 48,6 | 65,3 | 47,3 | 51,2 | 98,5 | 48,5 | 47,4 | 45,4 | 42,5 | 48,0 | 93,9 | 41,4 |
| $MgO$ | | 5,49 | 4,25 | 3, 92 | 19,1 | 5,71 | 5,63 | 3,98 | 3,98 | 4,33 | 4,46 | 4,45 | 2,52 | 3,01 | 2,06 |
| $SiO_2$ | | 0,51 | 4,61 | 5,23 | 0,59 | 4,63 | 1,02 | 4,81 | 4,81 | 5,88 | 8,0 | 10,8 | 0,88 | 3,93 | 7,83 |
| $CaO$ | | 0,06 | 0,25 | 0,21 | 0,15 | 0,22 | 0,11 | 0,17 | 0,17 | 0,09 | 0,12 | 0,20 | 0,06 | 0,31 | 3,33 |
| $BaO$ | | - | - | - | - | - | - | - | - | - | - | - | - | 3,39 | - |
| $Na_2O$ | | 0,08 | 0,13 | 0,12 | 0,03 | 0,11 | 0,11 | 0,15 | 0,15 | 0,13 | 0,12 | 0,10 | 0,06 | 0,09 | - |
| $K_2O$ | | - | 0,38 | 0,57 | 0,01 | 0,38 | 0,08 | 0,47 | 0,47 | 0,01 | 0,01 | 0,01 | - | - | - |
| $Fe_2O_3$ | | 0,56 | 0,56 | 0,91 | 0,70 | 0,47 | 0,49 | 0,55 | 0,55 | 0,51 | 0,51 | 0,41 | 0,41 | 0,46 | - |
| $ZrO_2$ | | 4,9 | 4,55 | 2, 97 | 13,7 | 4 | 4,86 | 0,85 | 0,85 | 2,25 | 2,28 | 2,03 | 1,94 | 4,46 | 4,87 |
| a | | 30,8 | 37,3 | 33,5 | 0,3 | 32,2 | 30,4 | 35,8 | 35,8 | 35,0 | 35,5 | 36,5 | 40,0 | 37,6 | 39,5 |
| t | | 54,3 | 49,8 | 55,4 | 58,1 | 52,4 | 54,4 | 54,7 | 54,7 | 53,7 | 52,6 | 51,3 | 53,1 | 52,4 | 51,5 |
| m | | 11,5 | 9,6 | 8,9 | 33,7 | 12,5 | 11,9 | 8,9 | 8,9 | 9,7 | 10,2 | 10,6 | 5,5 | 7,1 | 5,1 |
| zr | | 3,4 | 3,4 | 2,2 | 7,9 | 2,9 | 3,3 | 0,6 | 0,6 | 1,7 | 1,7 | 1,6 | 1,4 | 3,5 | 3,9 |
| 2a+3m | | 96,1 | 103,4 | 93,6 | 101,6 | 102,0 | 96,3 | 98,2 | 98,2 | 99,1 | 101,7 | 104,9 | 96,5 | 96,5 | 94,3 |
| 100+a | | 130,8 | 137,3 | 133,5 | 100,3 | 132,2 | 130,4 | 135,8 | 135,8 | 135,0 | 135,5 | 136,5 | 140,0 | 137,5 | 139,5 |
| 3t | | 163,0 | 149,3 | 166,3 | 174,4 | 157,2 | 163,2 | 169,1 | 169,1 | 161,0 | 157,7 | 153,9 | 159,4 | 157,2 | 154,4 |
| 210-a | | 179,2 | 172,7 | 176,5 | 209,7 | 177,8 | 179,6 | 174,2 | 174,2 | 175,0 | 174,5 | 173,5 | 170,0 | 172,4 | 170,4 |
| Phase | AMTZ | M | M | M | M | M | M | M | M | M | M | M | M | M | M |
| | P2 | - | ~ | ~ | ~ | ~ | ~ | ~ | ~ | ~ | ~ | ~ | ~ | ~ | ~ |
| | Autre phase | non | non | non | non | non | non | non | non | non | non | non | non | non | non |
| | PS | non | oui | oui | oui | oui | oui | oui | oui | oui | oui | oui | non | oui | oui |
| Stabilité | 100 heures | oui | oui | oui | | oui | oui | oui | oui | | | | oui | oui | oui |
| | Rapport pics $TiO_2$/AMTZ | <10 | <20 | <30 | | <20 | <5 | <10 | <10 | | | | <20 | <20 | <20 |
| Temp. frittage 4 h (°C) | | 1600 | 1450 | 1450 | 1500 | 1450 | 1450 | 1300 | 1450 | 1450 | 1450 | 1450 | 1450 | 1450 | 1400 |

| Exemple | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| CTE ($10^{-6}$/°C) | 0,8 | 1,1 | | 7,5 | 1,5 | 2,8 | 0,06 | 1,5 | 1,81 | 1,86 | 1,97 | 1,6 | 3,2 | 2,8 |
| MOR (MPa) | | 13,2 | 15,1 | | 12,6 | | 21,4 | 14,8 | 14,8 | 16,6 | 20,9 | | | |

On constate sur des données du tableau 1 que les grains selon l'invention permettent d'obtenir au final des produits céramiques se caractérisant par une stabilité et un CTE compatibles avec de nombreuses applications céramiques en particulier une application filtre à particules. Ils présentent en outre une bonne résistance mécanique.

La composition de chaque phase a ensuite été analysée par analyse microsonde, les résultats de l'analyse étant donnés dans le tableau 2. Sur la base de ces résultats, le pourcentage pondéral de chaque phase ainsi que les valeurs de x, y et z dans la formule générale $(Al_2TiO_5)_x$ $(MgTi_2O_5)_y$ $(MgTiZrO_5)_z$ de la phase principale AMTZ ont pu être estimés par calcul.

| Exemple | 2 | | | 8 | | | 10 | | | 11 | | |
|---|---|---|---|---|---|---|---|---|---|---|---|---|
| | AMTZ | PS | P2 | AMTZ | PS | P2 | AMTZ | PS | P2 | AMTZ | PS | P2 |
| $Al_2O_3$ | 45,9 | 26 | 0,4 | 45 | 21 | 1,4 | 49,4 | 20,7 | 8,1 | 49,5 | 20,8 | 0,9 |
| $TiO_2$ | 47,6 | 2,8 | 10 | 50,1 | 4,9 | 91,7 | 47,5 | 3,6 | 42 | 47 | 4,8 | 89,7 |
| $MgO$ | 3,52 | 10,2 | 0,07 | 3,9 | 4,2 | 0,1 | 2,1 | 11,6 | 1,4 | 2,3 | 11,4 | 0,1 |
| $SiO_2$ | 0,22 | 51,3 | 0,13 | 0,2 | 60,4 | 0,6 | 0,3 | 60,2 | 1,4 | 0,5 | 59,4 | 0,4 |
| $ZrO_2$ | 2,17 | 1,57 | 89,2 | 0,4 | 1,4 | 6 | 0,4 | 2,4 | 46,8 | 0,4 | 2,8 | 8,5 |
| $CaO$ | | 2,47 | | | 2,2 | 0,1 | | 0,6 | | | 0,3 | |
| $Na_2O$ | | 1,05 | | | 0,9 | | | 1,1 | 0,1 | | 0,5 | |
| $K_2O$ | | 4,32 | | | 5,2 | 0,1 | | 0,1 | | | | |
| $Fe_2O_3$ | 0,53 | 0,14 | | 0,5 | | 0,2 | 0,2 | 0,1 | 0,1 | 0,2 | 0,2 | 0,2 |
| x estimé (×100) | 84 | – | – | 82 | – | – | 89,5 | – | – | 89,8 | – | – |
| y estimé (×100) | 12 | – | – | 17 | – | – | 9,8 | – | – | 9,2 | – | – |
| z estimé (×100) | 4 | – | – | 1 | – | – | 0,7 | – | – | 1,1 | – | – |
| pourcentage estimé | 89 | 8 | 3 | 86 | 9 | 5 | 73 | 14 | 13 | 71 | 19 | 10 |

Tableau 2

| Exemple | 5 AMTZ | 5 PS | 5 P2 | 1 AMTZ | 1 P2 | 9 AMTZ | 9 PS | 9 P2 |
|---|---|---|---|---|---|---|---|---|
| $Al_2O_3$ | 43,1 | 23,8 | 0,8 | 39,5 | 0,9 | 48 | 20,9 | 0,9 |
| $TiO_2$ | 49,9 | 3,1 | 36,8 | 51,4 | 38,4 | 47,7 | 3,2 | 87,9 |
| $MgO$ | 4,5 | 8,1 | 0,1 | 5,9 | 0,1 | 2,8 | 11,4 | 0,1 |
| $SiO_2$ | 0,2 | 55,1 | | | 0,8 | 0,3 | 60,7 | 0,1 |
| $ZrO_2$ | 1,7 | 1,3 | 62,2 | 2,6 | 59,9 | 0,7 | 2,2 | 10,9 |
| $CaO$ | | 2,8 | | | | | 0,7 | |
| $Na_2O$ | | 1,3 | | | | | 0,9 | |
| $K_2O$ | | 4,8 | | | | | 0,1 | |
| $Fe_2O_3$ | 0,5 | 0,1 | 0,1 | 0,7 | 0,1 | 0,4 | 0,1 | 0,2 |
| x estimé (×100) | 79,4 | - | - | 73,3 | - | 87,4 | - | - |
| y estimé (×100) | 17,6 | - | - | 22,2 | - | 11,1 | - | - |
| z estimé (×100) | 3 | - | - | 4,5 | - | 1,5 | - | - |
| pourcentage estimé | 87 | 7 | 6 | 94 | 6 | 78 | 10 | 12 |

Tableau 2 (suite)

Des échantillons comparatifs, non conforme à l'invention, ont également été synthétisés et analysés selon les mêmes méthodes que précédemment décrites, avec cependant les modifications suivantes :

Selon un premier exemple comparatif 1, les grains fondus ont été synthétisés sans introduire de source de zirconium dans les réactifs initiaux.

Selon un deuxième exemple comparatif 2, les échantillons ne sont pas synthétisés avec des grains fondus mais à partir de grains obtenus par frittage réactif des poudres des matières premières précédemment décrites.

Selon un troisième exemple comparatif 3, les grains fondus ont été synthétisés en utilisant une trop faible quantité de titane dans le mélange initial, de telle sorte que 3t < 100 + a et 2a + 3m > 110.

Selon un quatrième exemple comparatif 4, les grains fondus ont été synthétisés en utilisant une quantité d'$Al_2O_3$ et de $TiO_2$ telle que 3t < 100 + a.

Les compositions et résultats obtenus pour ces trois exemples comparatifs sont rassemblés dans le tableau 3.

Tableau 3

| Exemple | exemple comparatif 1 | exemple comparatif 2 | exemple comparatif 3 | Exemple comparatif 4 |
|---|---|---|---|---|
| $Al_2O_3$ | 40,0 | 40,0 | 53,1 | 53,7 |
| $TiO_2$ | 49,1 | 49,1 | 39,4 | 42,8 |
| MgO | 4, 17 | 4,17 | 2,89 | 2,06 |
| $SiO_2$ | 5,08 | 5,08 | 0,98 | 0,33 |
| CaO | 0,22 | 0,22 | 0,05 | 0 |
| $Na_2O$ | 0,12 | 0,12 | 0,09 | 0,09 |
| $K_2O$ | 0, 64 | 0, 64 | 0 | <0,01 |
| $Fe_2O_3$ | 0, 64 | 0, 64 | 0,44 | 0,41 |
| $ZrO_2$ | 0, 03 | 0,03 | 2,95 | 0,56 |
| a | 35,3 | 35,3 | 46,9 | 47,1 |
| t | 55,3 | 55,3 | 44,5 | 47, 9 |
| m | 9,3 | 9,3 | 6,5 | 4, 6 |
| zr | 0,0 | 0,0 | 2,2 | 0, 6 |
| 2a+3m | 98,6 | 98, 6 | 113,2 | 108 |
| 100+a | 135,3 | 135,3 | 146,9 | 147,1 |
| 3t | 166,0 | 166,0 | 133,4 | 143,7 |
| 210-a | 174,7 | 174,7 | 163,1 | 162,9 |
| Phase | AMTZ | M | M | M | |
| | P2 | ~ | ~ | ~ | |
| | Autre phase | non | non | non | |
| | PS | oui | oui | non | |
| Stabilité | 100 heures | oui | oui | non | non |
| | Rapport pics $TiO_2$/AMT Z | <10 | <10 | > 200 | >100 |
| Temp frittage 4 h(°C) | | 1450 | 1450 | 1450 | 1600 |
| CTE ($10^{-6}$/°C) | | 4, 1 | 3,9 | 1, 6 | |
| MOR (MPa) | | 12,2 | | | |

On voit dans les données reportées dans le tableau 3 que les matériaux obtenus avec des grains non conformes à l'invention présentent des propriétés sensiblement inférieures aux précédents, selon l'invention.

En particulier les exemples comparatifs 3 et 4, non conformes à l'invention, présente une stabilité notoirement insuffisante.

En outre, les propriétés de résistance à la corrosion des matériaux ont été évaluées pour les exemples 8 (selon l'invention) et comparatif 2. Plus précisément 0,2 grammes de poudre de $K_2SO_4$ sont déposés de façon uniforme sur la surface du disque. L'échantillon ainsi recouvert est ensuite porté à 1300°C sous air pendant 5 heures. Après refroidissement, l'échantillon est découpé selon une coupe radiale et préparé pour une observation en coupe au Microscope Electronique à Balayage. On évalue alors visuellement sur les photographies MEB la profondeur E de l'échantillon, à partir de la surface initiale du disque, affectée par la corrosion. La profondeur E affectée par l'érosion est de 60 microns pour l'échantillon selon l'invention (exemple 8) et de 150 microns pour l'échantillon comparatif (exemple comparatif 2).

Les mêmes tests de résistance à la corrosion, excepté que le $K_2SO_4$ est remplacé par du $Na_2CO_3$, pratiqués sur un échantillon selon l'exemple 2 selon l'invention qui précède, montre que celui-ci n'est pas érodé au bout de 5 heures (E=0). Le même test, pratiqué sur un échantillon de même composition mais obtenu directement par un frittage réactif des réactifs initiaux (sans passage par une étape intermédiaire de fusion pour l'obtention de grains fondus), conduit au contraire à une valeur d'érosion E = 160 microns.

**Exemple d'application** : propriétés du matériau pour une utilisation spécifique comme filtre à particules

Pour étudier les caractéristiques de pièces mises en forme du matériau obtenu selon l'invention, notamment pour une application comme filtres à particules, des échantillons poreux ont été préparés selon l'invention à partir des mêmes poudres utilisées précédemment pour réaliser les échantillons 2 et 5, dont l'analyse chimique est reportée dans le tableau 4.

Les performances des échantillons obtenus selon les exemples 2 et 5 ont été comparées à un échantillon non conforme à l'invention (nouvel exemple comparatif 5). Le matériau poreux est synthétisé, selon cet exemple comparatif 5, à partir de grains obtenus par frittage réactif des poudres des matières premières, sans introduire de source de zirconium dans les réactifs initiaux.

Toutes les poudres de départ (grains fondus et matières premières) présentent un diamètre médian inférieur à 100 micromètres. Au sens de la présente description, le diamètre médian désigne le diamètre des particules au dessous duquel se trouve 50% en volume de la population.

Tel que décrit précédemment dans la description, un matériau céramique poreux est obtenu de la façon suivante : les poudres sont mélangées avec 5%, par rapport au poids total du mélange des poudres, d'un liant organique du type méthylcellulose et 8% d'un agent porogène. De l'eau est ajoutée en malaxant jusqu'à obtenir une pâte homogène et dont la plasticité permet l'extrusion d'un échantillon sous la forme d'une barrette de taille 6 mm x 8 mm x 60 mm, qui est ensuite frittée à 1450°C ou 1400°C pendant 4 heures, comme indiqué dans le tableau 4.

Sur ces échantillons, afin d'estimer la valeur du matériau utilisé dans une application « filtre à particules », on mesure le coefficient de dilatation thermique, le module de rupture MoR ainsi que les caractéristiques de porosité. De façon classique ces caractéristiques sont mesurées par les techniques bien connues de porosimétrie à haute pression de mercure, au moyen d'un porosimètre de type Micromeritics 9500.

Le retrait au frittage exprime la variation dimensionnelle de l'échantillon après un frittage à 1450° ou 1400°C selon les exemples. Plus précisément, selon l'invention on entend par retrait au frittage la diminution moyenne selon chacune des deux dimensions de la section du matériau, persistante à basse température, c'est-à-dire à une température inférieure à 400°C et notamment à l'ambiante. Dans le tableau 4, la valeur reportée du retrait correspond à la moyenne du retrait pour les deux dimensions, exprimé en pourcentage de la dimension initiale de la barrette avant frittage, pour chacune desdites dimensions. Cette caractéristique est extrêmement importante pour estimer la faisabilité du procédé de fabrication de la structure poreuse. En effet un fort retrait au frittage implique que le nid d'abeille constitué du matériau présente des difficultés majeures d'industrialisation, notamment pour obtenir avec une reproductibilité acceptable des structures dont les caractéristiques dimensionnelles peuvent être garanties avec une précision suffisante pour en permettre sans difficultés l'utilisation notamment dans une ligne d'échappement automobile.

Le module de rupture (MOR) est déterminé à la température ambiante en flexion 3 points sur les barrettes poreuses de dimensions 60 mm x 6 mm x 8 mm obtenues précédemment.

Les résultats sont présentés dans le tableau 4.

Tableau 4

| Exemple | 2 (inv.) | | 5 (inv.) | | comp5 |
|---|---|---|---|---|---|
| $Al_2O_3$ | 41,7 | | 37,1 | | 44,9 |
| $TiO_2$ | 43,6 | | 47,3 | | 44,7 |
| MgO | 4,25 | | 5,71 | | 3,55 |
| $SiO_2$ | 4,61 | | 4,63 | | 6,49 |
| CaO | 0,25 | | 0,22 | | 0,03 |
| $Na_2O$ | 0,13 | | 0,11 | | 0,15 |
| $K_2O$ | 0,38 | | 0,38 | | 0,08 |
| $Fe_2O_3$ | 0,56 | | 0,47 | | 0,05 |
| $ZrO_2$ | 4,55 | | 4 | | <0,1 |
| Temp. frittage 4 h (°C) | 1400°C | 1450°C | 1900°C | 1450°C | 1450°C |
| MOR (MPa) | 7,6 | 7,4 | 5,8 | 7,2 | 7,3 |
| Porosité (%) | 42,6 | 35,9 | 92,1 | 36,3 | 30,3 |

(suite)

| Exemple | 2 (inv.) | | 5 (inv.) | | comp5 |
|---|---|---|---|---|---|
| $d_{50}$ pores (microns) | 12,4 | 16,4 | 12,2 | 16,8 | 8,6 |
| Retrait au frittage (%) | 12 | 13,9 | 11,5 | 12,8 | 14,8 |
| CTE ($10^{-6}$/°C) | 0,87 | 0,27 | 1,24 | 0,44 | 0,79 |

Les résultats reportés dans le tableau 4 montrent que les grains de l'invention permettent d'obtenir des matériaux et des produits dont les caractéristiques globales sont sensiblement meilleures que celles des produits conventionnellement obtenus.

En particulier, on peut voir, par comparaison des données du tableau 1, l'amélioration significative des caractéristiques combinée de porosité et de résistance mécanique qui résulte de l'utilisation de grains fondus selon l'invention comme produits initiaux lors de la synthèse des monolithes : pour une température de frittage identique, on voit que la résistance MoR des barrettes poreuses selon les exemples 2 et 5 selon l'invention est comparable à celles de l'exemple comparatif 5, alors que le matériau constitutif des barrettes selon ces deux exemples présente une porosité supérieure de plus de 20% et un diamètre de pore supérieure de plus de 75% à ceux du matériau conventionnel selon l'exemple comparatif 5.

Dans les exemples et la description qui précèdent, l'invention a été surtout décrite en relation avec les avantages qu'elle procure par rapport à une utilisation dans le domaine des filtres à particules.

Cependant, il est bien évident que l'invention concerne également l'utilisation des grains de l'invention dans d'autres applications, en particulier toutes celles où une bonne stabilité thermique ainsi qu'un bon CTE sont nécessaires. Selon l'application, on pourra notamment adapter la taille des grains fondus selon l'invention, en particulier en choisissant un mode de broyage adapté.

## Revendications

1. Grains fondus présentant la composition chimique suivante, en pourcentages poids sur la base des oxydes:

- moins de 55% d' $Al_2O_3$,
- plus de 35% et moins de 80% de $TiO_2$,
- plus de 1% et moins de 20% de MgO,
- plus de 0,7% et moins de 20% de $ZrO_2$,
- moins de 20% de $SiO_2$,

lesdits grains fondus répondant en outre à la composition suivante, en pourcentage molaire sur la base des seuls oxydes $Al_2O_3$, $TiO_2$, MgO, $ZrO_2$:

$$90 < 2a + 3m < 110$$

$$100 + a < 3t < 210 - a,$$

$$a + t + m + zr = 100,$$

dans laquelle :
- a est le pourcentage molaire d'$Al_2O_3$,
- t est le pourcentage molaire de $TiO_2$,
- m est le pourcentage molaire de MgO,
- zr est le pourcentage molaire de $ZrO_2$.

2. Grains fondus selon la revendication 1, présentant la composition chimique suivante, en pourcentages poids sur la base des oxydes :

- plus de 35% et moins de 54% d'$Al_2O_3$,

- plus de 40% et moins de 55% de $TiO_2$,
- plus de 1,5% et moins de 10% de MgO,
- plus de 0,7% et moins de 6% de $ZrO_2$,
- plus de 0,1% et moins de 10% de $SiO_2$.

**3.** Grains fondus selon la revendication 1 ou 2, comprenant principalement ou étant constitués par une phase oxyde du type pseudo-brookite comprenant du titane, de l'aluminium, du magnésium et du zirconium.

**4.** Grains fondus selon la revendication précédente dans lesquels la phase oxyde du type pseudo-brookite répond sensiblement à la formulation :

$(Al_2TiO_5)_x (MgTi_2O_5)_y (MgTiZrO_5)_z$,

dans laquelle :

- x est compris entre 0 et 0,945
- y est compris entre 0,05 et 0,995,
- z est compris entre 0,005 et 0,1 et
- x + y + z = 1

**5.** Grains fondus selon l'une des revendications précédentes comprenant une phase principale du type pseudo-brookite et au moins une phase secondaire, ladite phase secondaire étant une phase silicatée et/ou une phase constituée essentiellement d'oxyde de titane $TiO_2$ et/ou d'oxyde de zirconium $ZrO_2$.

**6.** Grains fondus selon l'une des revendications précédentes dans lesquels une partie du $ZrO_2$ est remplacée par au moins un oxyde choisi dans le groupe constitué par $Ce_2O_3$ ou $HfO_2$, sur la base d'un remplacement en pourcentage molaire de l'élément Zr par l'élément Ce et/ou l'élément Hf.

**7.** Procédé de fabrication de grains selon l'une des revendications précédentes, comportant les étapes suivantes :

a) mélange des matières premières pour former la charge de départ,
b) fusion de la charge de départ jusqu'à obtention du liquide en fusion,
c) refroidissement dudit liquide en fusion de manière à ce que le liquide fondu soit entièrement solidifié,
d) broyage de la masse solide obtenu au cours de l'étape c) de manière jusqu'à obtenir un mélange de grains.

**8.** Produit céramique comprenant des grains selon l'une des revendications 1 à 6, notamment pour une utilisation dans les domaines suivants : fabrication de pièces réfractaires utilisées au contact de l'aluminium ou des métaux fondus, plaques à tiroirs, filtres à métaux ou fabrication de gazetterie pour les fours de frittage.

**9.** Produit céramique **se caractérisant en ce qu'**il comprend un matériau céramique obtenu après un procédé comprenant une étape de cuisson des grains selon l'une des revendications 1 à 6, à une température comprise entre 1300°C et 1800°C, ledit matériau comprenant principalement ou étant constitué par une phase oxyde du type pseudo-brookite comprenant du titane, de l'aluminium, du magnésium et du zirconium, dans des proportions telles que la phase du type pseudo-brookite répond sensiblement à la formulation :

$(Al_2TiO_5)_x (MgTi_2O_5)_y (MgTiZrO_5)_z$,

ledit matériau répondant à la composition suivante, en pourcentage molaire sur la base des seuls oxydes $Al_2O_3$, $TiO_2$, MgO, $ZrO_2$:

$$90 < 2a + 3m < 110$$

$$100 + a < 3t < 210 - a,$$

$$a + t + m + zr = 100,$$

dans laquelle :

- a est le pourcentage molaire d'$Al_2O_3$,
- t est le pourcentage molaire de $TiO_2$,
- m est le pourcentage molaire de MgO,
- zr est le pourcentage molaire de $ZrO_2$.

10. Produit céramique selon la revendication 9, présentant la composition chimique suivante, en pourcentage poids sur la base des oxydes :

- moins de 55% d'$Al_2O_3$,
- plus de 35% et moins de 80% de $TiO_2$,
- plus de 1% et moins de 20% de MgO,
- plus de 0,7% et moins de 20% de $ZrO_2$,
- moins de 20% de $SiO_2$.

11. Produit céramique selon la revendication 10, présentant la composition chimique suivante, en pourcentage poids sur la base des oxydes :

- plus de 35% et moins de 54% d'$Al_2O_3$,
- plus de 40% et moins de 55% de $TiO_2$,
- plus de 1,5% et moins de 10% de MgO,
- plus de 0,7% et moins de 6% de $ZrO_2$,
- plus de 0,1% et moins de 10% de $SiO_2$.

12. Produit céramique selon l'une des revendications 9 à 11 dans lequel :

- x est compris entre 0 et 0,945
- y est compris entre 0,05 et 0,995,
- z est compris entre 0,005 et 0,1 et
- x + y + z = 1.

13. Produit céramique selon la revendication précédente dans lequel :

- x est compris entre 0,70 et 0,90
- y est compris entre 0,05 et 0,50,
- z est compris entre 0,007 et 0,07 et
- x + y + z = 1.

14. Produit céramique selon l'une des revendications 9 à 13 comprenant une phase principale constituée par la phase du type pseudo-brookite et au moins une phase secondaire, ladite phase secondaire étant une phase silicatée et/ou une phase constituée essentiellement d'oxyde de titane $TiO_2$ et/ou d'oxyde de zirconium $ZrO_2$.

15. Produit céramique selon la revendication 13 dans lequel une phase secondaire est constituée par une phase silicatée, dans des proportions pouvant aller de 0 à 40% du poids total du matériau.

16. Produit céramique selon la revendication 15, dans lequel ladite phase silicatée est constituée principalement de silice et d'alumine, la proportion massique de silice dans la phase silicatée étant supérieure à 50%.

17. Produit céramique selon l'une des revendications 14 à 16 dans lequel une phase secondaire comprend essentiellement de l'oxyde de titane $TiO_2$ et/ou de l'oxyde de zirconium $ZrO_2$.

18. Produit céramique selon l'une des revendications 9 à 17, présentant une structure du type en nid d'abeilles, en particulier support catalytique ou filtre pour application automobile, le matériau céramique constituant ladite structure ayant une porosité supérieure à 10% et une taille des pores centrée entre 5 et 60 microns.

**Claims**

1.  Fused grains having the following chemical composition, in weight percentages on the basis of the oxides:

    - less than 55% of $Al_2O_3$;
    - more than 35% and less than 80% of $TiO_2$;
    - more than 1% and less than 20% of MgO;
    - more than 0.7% and less than 20% of $ZrO_2$; and
    - less than 20% of $SiO_2$,

    said fused grains also corresponding to the following composition, in molar percentages, on the basis of the single oxides $Al_2O_3$, $TiO_2$, MgO, $ZrO_2$ :

$$90 < 2a + 3m < 110$$

$$100 + a < 3t < 210 - a,$$

$$a + t + m + zr = 100,$$

    in which:

    - a is the molar percentage of $Al_2O_3$;
    - t is the molar percentage of $TiO_2$;
    - m is the molar percentage of MgO; and
    - zr is the molar percentage of $ZrO_2$.

2.  The fused grains as claimed in claim 1, having the following chemical composition, in weight percentages, on the basis of the oxides:

    - more than 35% and less than 54% of $Al_2O_3$;
    - more than 40% and less than 55% of $TiO_2$;
    - more than 1.5% and less than 10% of MgO;
    - more than 0.7% and less than 6% of $ZrO_2$; and
    - more than 0.1% and less than 10% of $SiO_2$.

3.  The molten grains as claimed in claim 1 or 2, mainly comprising or being composed of an oxide phase of pseudo-brookite type comprising titanium, aluminum, magnesium and zirconium.

4.  The fused grains as claimed in the preceding claim, in which the oxide phase of pseudo-brookite type substantially corresponds to the formulation:

    $(Al_2TiO_5)_x$ $(MgTi_2O_5)_y$ $(MgTiZrO_5)_z$,

    in which:

    - x is between 0 and 0.945;
    - y is between 0.05 and 0.995;
    - z is between 0.005 and 0.1; and
    - x + y + z = 1.

5.  The fused grains as claimed in one of the preceding claims, comprising a main phase of pseudo-brookite type and at least one secondary phase, said secondary phase being a silicate phase and/or a phase composed essentially of titanium oxide $TiO_2$ and/or zirconium oxide $ZrO_2$.

6. The fused grains as claimed in one of the preceding claims, in which one portion of the $ZrO_2$ is replaced by at least one oxide chosen from the group formed by $Ce_2O_3$ or $HfO_2$, on the basis of a molar percentage replacement of the Zr element by the Ce element and/or the Hf element.

7. A process for manufacturing grains as claimed in one of the preceding claims, comprising the following steps:

   a) mixing raw materials to form the starting feedstock;
   b) fusion of the starting feedstock until the molten liquid is obtained;
   c) cooling of said molten liquid so that the fused liquid is entirely solidified; and
   d) milling of the solid mass obtained during step c) so as to obtain a mixture of grains.

8. A ceramic product comprising grains as claimed in one of claims 1 to 6, especially for use in the following fields: manufacture of refractory parts used in contact with aluminum or with molten metals, slide-gate valve plates, metal filters or manufacture of saggar products for sintering furnaces.

9. A ceramic product that is **characterized in that** it comprises a ceramic material obtained following a process comprising a step of firing the grains as claimed in one of claims 1 to 6, at a temperature between 1300°C and 1800°C, said material mainly comprising or being composed of an oxide phase of pseudo-brookite type comprising titanium, aluminum, magnesium and zirconium, in proportions such that the pseudo-brookite type phase corresponds substantially to the formulation:

   $(Al_2TiO_5)_x (MgTi_2O_5)_y (MgTiZrO_5)_z$,

   said material corresponding to the following composition, in molar percentages, on the basis of the single oxides $Al_2O_3$, $TiO_2$, MgO, $ZrO_2$:

$$90 < 2a + 3m < 110$$

$$100 + a < 3t < 210 - a,$$

$$a + t + m + zr = 100,$$

   in which:

   - a is the molar percentage of $Al_2O_3$;
   - t is the molar percentage of $TiO_2$;
   - m is the molar percentage of MgO; and
   - zr is the molar percentage of $ZrO_2$.

10. The ceramic product as claimed in claim 9, having the following chemical composition, in weight percentages on the basis of the oxides:

    - less than 55% of $Al_2O_3$;
    - more than 35% and less than 80% of $TiO_2$;
    - more than 1% and less than 20% of MgO;
    - more than 0.7% and less than 20% of $ZrO_2$; and
    - less than 20% of $SiO_2$.

11. The ceramic product as claimed in claim 10, having the following chemical composition, in weight percentages, on the basis of the oxides:

- more than 35% and less than 54% of $Al_2O_3$;
- more than 40% and less than 55% of $TiO_2$;
- more than 1.5% and less than 10% of MgO;
- more than 0.7% and less than 6% of $ZrO_2$; and
- more than 0.1% and less than 10% of $SiO_2$.

**12.** The ceramic product as claimed in one of claims 9 to 11, in which:

- x is between 0 and 0.945;
- y is between 0.05 and 0.995;
- z is between 0.005 and 0.1; and
- x + y + z = 1.

**13.** The ceramic product as claimed in the preceding claim, in which:

- x is between 0.70 and 0.90;
- y is between 0.05 and 0.50;
- z is between 0.007 and 0.07; and
- x + y + z = 1.

**14.** The ceramic product as claimed in one of claims 9 to 13, comprising a main phase composed of the phase of pseudo-brookite type and at least one secondary phase, said secondary phase being a silicate phase and/or a phase composed essentially of titanium oxide $TiO_2$ and/or zirconium oxide $ZrO_2$.

**15.** The ceramic product as claimed in claim 13, in which a secondary phase is composed of a silicate phase, in proportions which may range from 0 to 40% of the total weight of the material.

**16.** The ceramic product as claimed in claim 15, in which said silicate phase is mainly composed of silica and alumina, the weight proportion of silica in the silicate phase being greater than 50%.

**17.** The ceramic product as claimed in one of claims 14 to 16, in which a secondary phase essentially comprises titanium oxide $TiO_2$ and/or zirconium oxide $ZrO_2$.

**18.** The ceramic product as claimed in one of claims 9 to 17, having a honeycomb type structure, in particular a catalyst support or filter for an automotive application, the ceramic material forming said structure having a porosity of greater than 10% and a pore size centered between 5 and 60 microns.

**Patentansprüche**

**1.** Geschmolzene Körner, die die folgende chemische Zusammensetzung, in Gewichtsprozenten, auf der Basis der Oxide:

- weniger als 55 % $Al_2O_3$,
- mehr als 35 % und weniger als 80 % $TiO_2$,
- mehr als 1 % und weniger als 20 % MgO,
- mehr als 0,7 % und weniger als 20 % $ZrO_2$,
- weniger als 20 % $SiO_2$,

aufweisen, wobei die geschmolzenen Körner ferner der folgenden Zusammensetzung, in Molprozent, auf der Basis lediglich der Oxide $Al_2O_3$, $TiO_2$, MgO, $ZrO_2$ gerecht werden:

$$90 < 2a + 3m < 110$$

$$100 + a < 3t < 210 - a,$$

$$a + t + m + zr = 100,$$

worin :

- a der Molprozentsatz von $Al_2O_3$ ist,
- t der Molprozentsatz von $TiO_2$ ist,
- m der Molprozentsatz von MgO ist,
- zr der Molprozentsatz von $ZrO_2$ ist.

2. Geschmolzene Körner nach Anspruch 1, die die folgende chemische Zusammensetzung, in Gewichtsprozenten, auf der Basis der Oxide:

- mehr als 35 % und weniger als 54 % $Al_2O_3$,
- mehr als 40 % und weniger als 55 % $TiO_2$,
- mehr als 1,5 % und weniger als 10 % MgO,
- mehr als 0,7 % und weniger als 6 % $ZrO_2$,
- mehr als 0,1 % und weniger als 10 % $SiO_2$

aufweisen.

3. Geschmolzene Körner nach Anspruch 1 oder 2, die hauptsächlich eine Oxidphase vom Typ Pseudobrookit mit Titan, Aluminium, Magnesium und Zirkonium umfassen oder durch diese gebildet sind.

4. Geschmolzene Körner nach dem vorstehenden Anspruch, bei denen die Oxidphase vom Typ Pseudobrookit im Wesentlichen der Formulierung:

$$(Al_2TiO_5)_x \, (MgTi_2O_5)_y \, (MgTiZrO_5)_z$$

gerecht wird, worin:

- x zwischen 0 und 0,945 liegt,
- y zwischen 0,05 und 0,995 liegt,
- z zwischen 0,005 und 0,1 liegt und
- x + y + z = 1.

5. Geschmolzene Körner nach einem der vorstehenden Ansprüche, umfassend eine Hauptphase vom Typ Pseudobrookit sowie wenigstens eine Nebenphase, wobei die Nebenphase eine Silikatphase und/oder eine im Wesentlichen aus Titandioxid $TiO_2$ und/oder aus Zirkonoxid $ZrO_2$ bestehende Phase ist.

6. Geschmolzene Körner nach einem der vorstehenden Ansprüche, bei denen ein Teil des $ZrO_2$ durch wenigstens ein Oxid, welches aus der Gruppe bestehend aus $Ce_2O_3$ oder $HfO_2$ ausgewählt ist, ersetzt ist, auf der Basis eines molprozentigen Ersatzes des Elements Zr durch das Element Ce und/oder das Element Hf.

7. Verfahren zur Herstellung von Körnern nach einem der vorstehenden Ansprüche, das die folgenden Schritte umfasst:

a) Mischen der Rohstoffe, um die Ausgangscharge zu bilden,
b) Einschmelzen der Ausgangscharge bis zum Erhalt der flüssigen Schmelze,
c) Abkühlen der flüssigen Schmelze derart, dass die geschmolzene Flüssigkeit vollständig verfestigt wird,
d) Mahlen der im Laufe des Schrittes c) gewonnenen festen Masse, bis eine Körnermischung erhalten wird.

8. Keramikprodukt, das Körner nach einem der Ansprüche 1 bis 6 umfasst, insbesondere für eine Verwendung in folgenden Bereichen: Herstellung von feuerfesten Teilen, die in Kontakt mit Aluminium oder geschmolzenen Metallen verwendet werden, Schieberplatten, Metallfiltern oder Herstellung von Kapselung für Sinteröfen.

9. Keramikprodukt, das **dadurch gekennzeichnet ist, dass** es ein Keramikmaterial umfasst, welches nach einem Verfahren erhalten wird, das einen Schritt zum Brennen der Körner nach einem der Ansprüche 1 bis 6, bei einer Temperatur zwischen 1300 °C und 1800 °C umfasst, wobei das Material hauptsächlich eine Oxidphase vom Typ Pseudobrookit mit Titan, Aluminium, Magnesium und Zirkonium umfasst oder durch diese gebildet ist, in Anteilen, die derart sind, dass die Phase vom Typ Pseudobrookit im Wesentlichen der Formulierung:

$(Al_2TiO_5)_x (MgTi_2O_5)_y (MgTiZrO_5)_z$

gerecht wird, wobei das Material der folgenden Zusammensetzung, in Molprozent, auf der Basis lediglich der Oxide $Al_2O_3$, $TiO_2$, MgO, $ZrO_2$ gerecht wird:

$$90 < 2a + 3m < 110$$

$$100 + a < 3t < 210 - a,$$

$$a + t + m + zr = 100,$$

worin :

- a der Molprozentsatz von $Al_2O_3$ ist,
- t der Molprozentsatz von $TiO_2$ ist,
- m der Molprozentsatz von MgO ist,
- zr der Molprozentsatz von $ZrO_2$ ist.

10. Keramikprodukt nach Anspruch 9, das die folgende chemische Zusammensetzung, in Gewichtsprozent, auf der Basis der Oxide:

- weniger als 55 % $Al_2O_3$,
- mehr als 35 % und weniger als 80 % $TiO_2$,
- mehr als 1 % und weniger als 20 % MgO,
- mehr als 0,7 % und weniger als 20 % $ZrO_2$,
- weniger als 20 % $SiO_2$

aufweist.

11. Keramikprodukt nach Anspruch 10, das die folgende chemische Zusammensetzung, in Gewichtsprozent, auf der Basis der Oxide:

- mehr als 35 % und weniger als 54 % $Al_2O_3$,
- mehr als 40 % und weniger als 55 % $TiO_2$,
- mehr als 1,5 % und weniger als 10 % MgO,
- mehr als 0,7 % und weniger als 6 % $ZrO_2$,
- mehr als 0,1 % und weniger als 10 % $SiO_2$

aufweist.

12. Keramikprodukt nach einem der Ansprüche 9 bis 11, wobei:

- x zwischen 0 und 0,945 liegt,
- y zwischen 0,05 und 0,995 liegt,
- z zwischen 0,005 und 0,1 liegt und
- x+y+z= 1.

13. Keramikprodukt nach dem vorstehenden Anspruch, wobei:

- x zwischen 0,70 und 0,90 liegt,

- y zwischen 0,05 und 0,50 liegt,
- z zwischen 0,007 und 0,07 liegt und
- x + y + z = 1.

**14.** Keramikprodukt nach einem der Ansprüche 9 bis 13, umfassend eine Hauptphase, die durch die Phase vom Typ Pseudobrookit gebildet ist, sowie wenigstens eine Nebenphase, wobei die Nebenphase eine Silikatphase und/oder eine im Wesentlichen aus Titandioxid $TiO_2$ und/oder aus Zirkonoxid $ZrO_2$ bestehende Phase ist.

**15.** Keramikprodukt nach Anspruch 13, wobei eine Nebenphase durch eine Silikatphase in Anteilen, die von 0 bis 40 % des Gesamtgewichts des Materials reichen können, gebildet ist.

**16.** Keramikprodukt nach Anspruch 15, wobei die Silikatphase hauptsächlich von Siliciumdioxid und Aluminiumoxid gebildet ist, wobei der Masseanteil von Siliciumdioxid in der Silikatphase mehr als 50 % beträgt.

**17.** Keramikprodukt nach einem der Ansprüche 14 bis 16, wobei eine Nebenphase im Wesentlichen Titandioxid $TiO_2$ und/oder Zirkonoxid $ZrO_2$ umfasst.

**18.** Keramikprodukt nach einem der Ansprüche 9 bis 17, das eine bienenwabenartige Struktur aufweist, insbesondere katalytischer Träger oder Filter für die Automobilanwendung, wobei das Keramikmaterial, das die Struktur bildet, eine Porosität von über 10 % und eine Porengröße im Bereich zwischen 5 und 60 Mikrometern aufweist.

**EP 2 303 796 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 816065 A
- EP 1142619 A
- EP 1455923 A
- WO 2004090294 A
- WO 2004065088 A
- WO 2004011124 A
- EP 1559696 A
- US 3993119 A